(19) Europäisches Patentamt
European Patent Office
Office européen des brevets

(11) EP 2 927 073 A1

(12) EUROPEAN PATENT APPLICATION
published in accordance with Art. 153(4) EPC

(43) Date of publication:
07.10.2015 Bulletin 2015/41

(51) Int Cl.:
B60W 20/00 (2006.01)   B60K 6/445 (2007.10)
B60L 11/14 (2006.01)   B60W 10/04 (2006.01)
B60W 10/06 (2006.01)   B60W 10/08 (2006.01)
B60W 10/26 (2006.01)   B60W 30/182 (2012.01)
F02D 29/02 (2006.01)

(21) Application number: 13859538.4

(22) Date of filing: 21.11.2013

(86) International application number:
PCT/JP2013/081396

(87) International publication number:
WO 2014/084116 (05.06.2014 Gazette 2014/23)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 28.11.2012 JP 2012259370

(71) Applicant: TOYOTA JIDOSHA KABUSHIKI
KAISHA
Toyota-shi, Aichi-ken, 471-8571 (JP)

(72) Inventor: HISANO, Taishi
Toyota-shi
Aichi-ken 471-8571 (JP)

(74) Representative: Intès, Didier Gérard André et al
Cabinet Beau de Loménie
158, rue de l'Université
75340 Paris Cedex 07 (FR)

(54) HYBRID VEHICLE TRAVEL STATE CONTROL DEVICE

(57)     An apparatus (100) controls a running state of a hybrid vehicle, wherein the hybrid vehicle is configured to select, as a running mode, an EV running mode and a HV running mode, the hybrid vehicle is configured further to select an intermittent operation mode for repeating acceleration running and coasting by intermittently driving the drive wheels, in the HV running mode. The apparatus switches the EV running mode to the intermittent operation mode according to a comparison result between a power storage amount of the power storing device and a convergence value of the power storage amount in a case where the intermittent operation mode is selected, if the intermittent operation mode is required during steady running by the EV running mode.

FIG. 3

## Description

Technical Field

The present invention relates to a running state control apparatus for a hybrid vehicle, configured to control a running state of a hybrid vehicle.

Background Art

In this type of technical field, there is known acceleration-coasting in which acceleration running and coasting running are repeated in a preset vehicle speed range, wherein in the acceleration running, an internal combustion engine is set to be in an operating state to use driving power, which is transmitted to drive wheels, to accelerate a vehicle, and in the coasting, the internal combustion engine is set to be in a non-operating state to use inertia force to run the vehicle by inertia (refer to Patent Literature 1).

According to a control apparatus for a vehicle described in the Patent Literature 1, if the vehicle enters a downgrade during the acceleration running, the acceleration running and the coasting are switched according to a fuel consumption amount. It is thus considered that the vehicle can run with a reduced fuel consumption amount.

Patent Literature 2 discloses control that performs the coasting according to a change in an accelerator opening degree in a hybrid vehicle that can perform an EV running.

Patent Literature 3 describes a vehicle control apparatus configured to start an engine if a battery remaining amount becomes less than or equal to a predetermined value and to charge a battery.

Patent Literature 4 describes control that repeats a period in which a vehicle is allowed to run with highly efficiently driving a motor and a period in which the vehicle is coasted without driving the motor.

Patent Literature 5 discloses a hybrid vehicle provided with an EV running mode and a HV running mode, as a running mode. The Patent Literature 5 also describes such control that the vehicle runs in the EV running mode until the battery remaining amount decreases to a target value and the running mode is switched to the HV running mode if the battery remaining amount falls under the target value.

Citation List

Patent Literature

Patent Literature 1: Japanese Patent Application Laid Open No. 2010-280363
Patent Literature 2: Japanese Patent Application Laid Open No. 2011-020561

Patent Literature 3: Japanese Patent Application Laid Open No. 2005-047342
Patent Literature 4: Japanese Patent Application Laid Open No. 2012-110089
Patent Literature 5: Japanese Patent Application Laid Open No. 2011-235849

Summary of Invention

Technical Problem

The hybrid vehicle is provided, as the running mode, with the electric vehicle (EV) running mode for allowing only the power of a rotating electric machine to act on the drive wheels, in addition to the hybrid vehicle (HV) running mode for allowing both the power of the rotating electric machine and the power of the internal combustion engine to cooperatively act on the drive wheels, in many cases. The EV running mode simply means a running mode that allows the hybrid vehicle to function as a so-called electric vehicle.

Recently, as disclosed in the aforementioned Patent Literatures, there has been proposed a so-called intermittent operation mode in which the drive wheels are intermittently driven to repeat the acceleration running and the coasting in the HV running mode. In the running in the intermittent operation mode, a vehicle speed is maintained in a predetermined range including a target vehicle speed while the acceleration running and the coasting are repeated. In other words, the vehicle speed simply increases to a higher vehicle speed side than the target vehicle speed in the acceleration running, and decreases to a lower vehicle speed side than the target vehicle speed in the coasting. The intermittent operation mode is performed, preferably during steady running in which the target vehicle speed is generally constant and if the fuel consumption of the internal combustion engine can be saved in comparison with during the steady running.

By the way, the steady running is not necessarily the running state that is produced only in the HV running mode. In other words, the steady running state can be preferably formed even in the EV running mode. In the conventional control, however, if the intermittent operation mode is required due to satisfaction of a predetermined execution condition or the like, whether the running mode selected at that time point is the EV running mode or another running mode including the HV running mode is not set as a criterion or a determination reference. Therefore, if the intermittent operation mode is required even during the steady running by the EV running mode, the running mode is switched to the HV running mode, and the intermittent operation mode is performed.

Here, a power storage amount of a power storing device in the intermittent operation mode is designed to converge to a certain convergence value in terms of control. Therefore, if the EV running mode is unconditionally switched to the intermittent operation mode (or necessarily to the HV running mode) when the intermittent operation mode is required, the power storage amount changes toward the convergence value after the start of the internal combustion engine. That is because the HV running mode is basically accompanied by the start of the internal combustion engine, even though the cooperative aspect of the internal combustion engine and the rotating electric machine in the HV running mode is not unique.

Here, particularly in the EV running mode, the power storage amount decreases as long as the vehicle runs. Thus, if the power storage amount of the power storing device when the intermittent operation mode is required is sufficiently large with respect to the convergence value to which the power storage amount is to converge when the intermittent operation mode is selected at that time point, then, the power storage amount is reduced after the start of the internal combustion engine, regardless of the decrease in the power storage amount even if the EV running mode is continued, in a transitional period in which the power storage amount decreases toward the convergence value. In other words, in the transitional period, fuel required for the drive of the internal combustion engine is almost all wasted. This is against a fuel consumption saving effect by the intermittent operation mode, and is a technical problem in incorporating the intermittent operation mode into actual control.

In view of the aforementioned technical problems, it is therefore an object of the present invention to provide a running state control apparatus for a hybrid vehicle, configured to optimize timing of the switching to the intermittent operation mode, thereby suppressing the fuel consumption of the internal combustion engine as much as possible.

Solution to Problem

The above object of the present invention can be achieved by a running state control apparatus for a hybrid vehicle, configured to control the hybrid vehicle, the vehicle is provided with: an internal combustion engine; at least one rotating electric machine; and a power storing device, the hybrid vehicle being configured to select, as a running mode, an EV running mode for allowing only power of the rotating electric machine to act on drive wheels, and a HV running mode for allowing both the power of the rotating electric machine and power of the internal combustion engine to cooperatively act on the drive wheels, the hybrid vehicle being configured further to select an intermittent operation mode for repeating acceleration running and coasting by intermittently driving the drive wheels, in the HV running mode, said running state control apparatus is provided with: a switching control device configured to compare a power storage amount of the power storing device with a convergence value of the power storage amount in a case where the intermittent operation mode is selected, and to switch the EV running mode to the intermittent operation mode according to a comparison result.

The hybrid vehicle according to the present invention has the internal combustion engine and the at least one rotating electric machine, as a power source. The rotating electric machine is preferably an electric motor generator having both a power running function and a regenerative function. Particularly, the regenerative function is realized by using at least a part of the power of the internal combustion engine.

Any aspect of power transmission between the internal combustion engine and a drive shaft connected to the drive wheels and between the rotating electric machine and the drive shaft can be used, as long as it allows the power of the internal combustion engine and the power of the rotating electric machine to cooperatively act on the drive shaft, and as long as only the power of the rotating electric machine can be transmitted to the drive shaft. If, however, charging of the power storing device by power regeneration is realized in the EV running mode in which only the power of the rotating electric machine is transmitted to the drive shaft, it is preferable to adopt such a configuration that a plurality of rotating electric machines are provided and that one of the plurality of rotating electric machines drives the drive wheels by power-running while the other of the plurality of rotating electric machines generates power by the power regeneration.

According to the hybrid vehicle of the present invention, if the intermittent operation mode is required when steady running by the EV running mode is performed, the EV running mode is switched to the intermittent operation mode (or necessarily the HV running mode) according to the comparison result between the power storage amount of the power storing device and the convergence value of the power storage amount in the intermittent operation mode.

The power storage amount of the power storing device is preferably alternatively represented by a control value referred to a state of charge (SOC). The SOC is an index value obtained by defining the power storage amount of the power storing device with a full charge state of 100 (%) and a full discharge state of 0 (%). The power storage amount may be specified, for example, by using a SOC sensor configured to monitor the SOC or the like. If an initial value of the power storage amount is given, the power storage amount can be also estimated by a process of integrating input/output power that correlates with the product of output voltage and load current.

In the intermittent operation mode, the internal combustion engine has started, and the power generation by the power regeneration as described above is performed, as occasion demands, during the acceleration running depending on a vehicle configuration. During the acceleration running, the drive wheels are driven by the cooperation between the power of the internal combustion engine and the power of the rotating electric machine, due to the power-running action of the rotating electric machine. On the other hand, during the coasting, the internal combustion engine and the rotating electric machine are set in a no-load state, and most of power consumption is power consumption by an auxiliary machine. In the intermittent operation mode, the power storage amount of the power storing device converges toward a certain convergence value by controlling power balance between during the acceleration running and during the coasting.

The convergence value of the power storage amount is, on one side, a control target value of the power storage amount in the intermittent operation mode. In the hybrid vehicle, the rotating electric machine preferably has the power running function and the regenerative function, as described above, and thus, precise control of the power storage amount of the power storing device is required. In the hybrid vehicle, generally, the control target value (e.g. a target SOC in practice) is provided for the power storage amount of the power storing device, and the power balance, which is the sum of a discharge amount and a charge amount of the power storing device, is controlled in such a manner that the power storage amount is maintained at the control target value.

The convergence value of the power storage amount means the control target value, as one example. Alternatively, as another example, the convergence value means a control target value specialized for during the implementation of the intermittent operation mode based on the above control target value. In any case, preferably, the convergence value can vary, as occasion demands, for example, according to a target vehicle speed, target acceleration/deceleration, an allowable variation width of the vehicle speed, a discharge/charge limit value of the power storing device, required power of the auxiliary machine, or the like.

The convergence value may be determined, for example, in correlation with one or a plurality of parameters through experimental, experiential, or theoretical processes in advance. In this case, the convergence value(s) may be stored in a storage apparatus, preferably in a form of a control map or the like. Alternatively, a part or all of the convergence value may be calculated at each time by an arithmetic process according to an operation algorithm formulated through experimental, experiential, or theoretical processes in advance.

Here, the power storage amount decreases in the EV running mode. Thus, if the power storage amount when the intermittent operation mode is required is greater than the convergence value in the intermittent operation mode, it is apparently more advantageous to continue the EV running mode until a region near the convergence value than to reduce the power storage amount to near the convergence value by controlling the power balance in the intermittent operation mode accompanied by the start of the internal combustion engine, in the point that the fuel consumption of the internal combustion engine can be saved.

The applicant has focused on this point and has configured the running state control apparatus for the hybrid vehicle according to the present invention in such a manner that the EV running mode is switched to the intermittent operation mode according to the comparison result between the specified power storage amount and the convergence value if the intermittent operation mode is required when the steady running by the EV running mode is performed.

By virtue of such a configuration, it is possible to optimize execution timing of the intermittent operation mode accompanied by the start of the internal combustion engine, and the internal combustion engine is thus no longer started at timing at which the start is originally not required. In other words, the fuel consumption of the internal combustion engine can be suppressed as much as possible.

In one aspect of the running state control apparatus for the hybrid vehicle according to the present invention, said running state control apparatus further comprises a determining device configured to determine whether or not the intermittent operation mode is required, said switching control device switches the EV running mode to the intermittent operation mode on the basis of a deviation between the power storage amount and the convergence value, if said determining device determines that the intermittent operation is required when steady running by the EV running mode is performed.

In this aspect, said switching control device switches the EV running mode to the intermittent operation mode if the power storage amount is greater than or equal to the convergence value and if the deviation is less than a reference value.

In this case, if the power storage amount is greater than or equal to the convergence value and is less than the reference value, the EV running mode is switched to the intermittent operation mode. It is thus possible to smoothly switch the EV running mode to the intermittent operation mode while suppressing the fuel consumption of the internal combustion engine.

In another aspect of the running state control apparatus for the hybrid vehicle according to the present invention, the convergence value is set on the basis of at least one of a vehicle speed, auxiliary machine power consumption, an upper/lower limit value of the vehicle speed in the intermittent operation mode, acceleration/deceleration in the intermittent operation mode, and a discharge/charge limit value of said power storing device..

According to this aspect, the convergence value is accurately set according to various operating conditions of the hybrid vehicle, such as a target vehicle speed (or simply a vehicle speed when the intermittent operation is required), auxiliary machine power consumption, an allowable variation width of the vehicle speed with respect to the target vehicle speed, acceleration during the acceleration running, deceleration during the coasting, a charge limit value (Win) and a discharge limit value (Wout) of the power storing device, or the like. It is therefore possible to switch the EV running mode to the intermittent operation mode at accurate timing.

The operation and other advantages of the present invention will become more apparent from an embodiment explained below.

Brief Description of Drawings

[FIG. 1] FIG. 1 is a schematic diagram conceptually illustrating a configuration of a hybrid vehicle according to a first embodiment of the present invention.
[FIG. 2] FIG. 2 is a schematic diagram illustrating a hybrid drive apparatus of the hybrid vehicle in FIG. 1.
[FIG. 3] FIG. 3 is a flowchart illustrating an intermittent operation control process of the hybrid vehicle in FIG. 1.
[FIG. 4] FIG. 4 is a flowchart illustrating a convergence value estimation process of the intermittent operation control process in FIG. 3.
[FIG. 5] FIG. 5 is a conceptual diagram illustrating a convergence value estimated in the convergence value estimation process in FIG. 4.
[FIG. 6] FIG. 6 is a flowchart illustrating a control start threshold setting process, which is a sub routine of the intermittent operation control process in FIG. 3.
[FIG. 7] FIG. 7 is a conceptual diagram illustrating a control start threshold value set in the control start threshold setting process in FIG. 6.

Description of Embodiment

<Embodiment of the Invention>

Hereinafter, an embodiment of the present invention will be explained with reference to the drawings.

<Configuration of Embodiment>

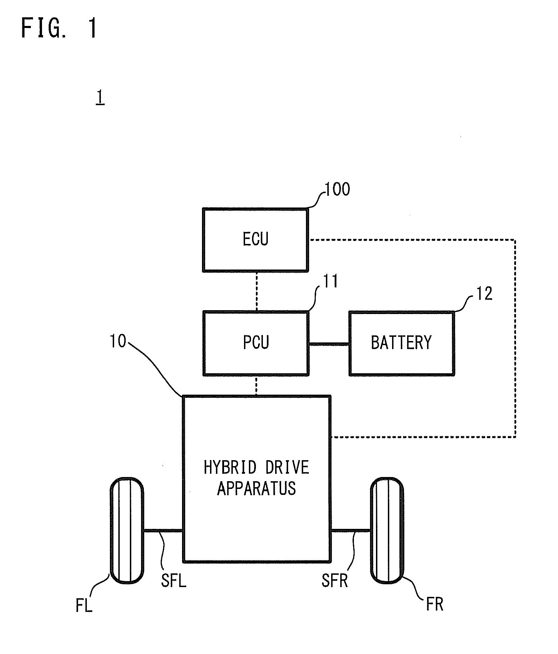

Firstly, with reference to FIG. 1, a configuration of a hybrid vehicle 1 according to an embodiment of the present invention will be explained. FIG. 1 is a schematic diagram conceptually illustrating the configuration of the hybrid vehicle 1.

In FIG. 1, the hybrid vehicle 1 is a vehicle provided with an electronic control unit (ECU) 100, a power control unit (PCU) 11, a battery 12, and a hybrid drive apparatus 10.

The ECU 100 is provided with a central processing unit (CPU), a read only memory (ROM), and a random access memory (RAM), and is an electronic control unit configured to control operation of each unit of the hybrid vehicle 1. The ECU 100 is one example of the "running state control apparatus for the hybrid vehicle" of the present invention. The ECU 100 can perform an "intermittent operation control process" described later, in accordance with a control program stored in the ROM.

The PCU 11 is a control unit that includes a not-illustrated inverter(s) and that is configured to control input/output of electric power between the battery 12 and each motor generator, and input/output of electric power between the motor generators. The latter case namely means that electric power is transmitted and received between the motor generators without via the battery 12.

The inverter(s) is configured to convert direct-current (DC) power extracted from the battery 12 to alternating-current (AC) power and supply it to a motor generator MG1 and a motor generator MG2 described later, and configured to convert AC power generated by the motor generator MG1 and the motor generator MG2 to DC power and supply it to the battery 12.

The PCU 11 is electrically connected to the ECU 100, and the operation of the PCU 11 is controlled by the ECU 100.

The battery 12 is a chargeable secondary battery unit configured to function as an electric power supply associated with electric power for power running of the motor generator MG1 and the motor generator MG2. The battery 12 is one example of the "power storing device" according to the present invention, having such a configuration that a plurality of (e.g. several hundred of) unit battery cells such as, for example, lithium ion battery cells are connected in series.

The illustration is omitted, but the hybrid vehicle 1 is provided with various sensors configured to detect various state quantities of the hybrid vehicle 1. For example, the various sensors include a vehicle speed sensor configured to detect a vehicle speed V of the hybrid vehicle 1, an accelerator opening sensor configured to detect an accelerator opening degree Ta, which is a manipulated variable or operation amount of an accelerator pedal, a brake pedal sensor configured to detect a manipulated variable or operation amount of a brake pedal, a battery temperature sensor configured to detect temperature of the battery 12, a SOC sensor configured to detect a SOC of the battery 12 (i.e. one example of the "power storage amount" according to the present invention), or the like. Each of the sensors is electrically connected to the ECU 100, and the detected various state quantities, control quantities, or physical quantities are referred to by the ECU 100, as occasion demands.

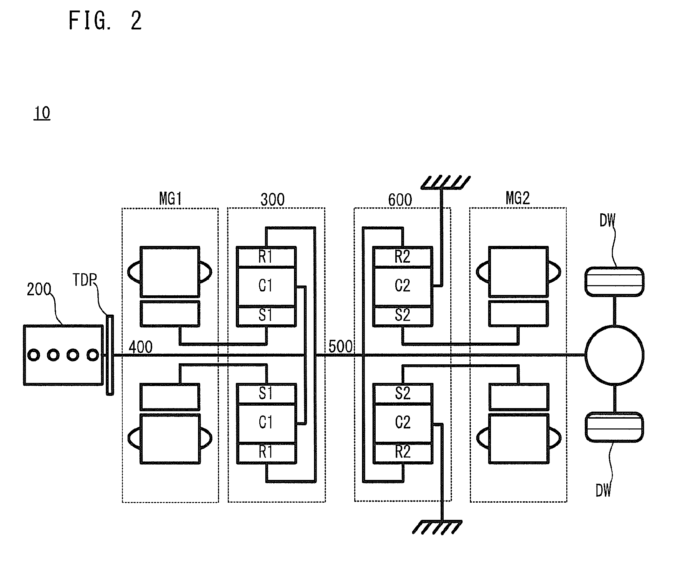

The hybrid drive apparatus 10 is a power train of the hybrid vehicle 1. Now, with reference to FIG. 2, a detailed configuration of the hybrid drive apparatus 10 will be explained. FIG. 2 is a schematic configuration diagram conceptually illustrating the configuration of the hybrid drive apparatus 10. In FIG. 2, the same parts as those in FIG. 1 will carry the same reference numerals, and an explanation thereof will be omitted as occasion demands.

The hybrid drive apparatus 10 is provided with an engine 200, a power dividing mechanism 300, an input shaft 400, a drive shaft 500, a reduction mechanism 600, the motor generator MG1 (hereinafter abbreviated as "MG1" as occasion demands), and the motor generator MG2 (hereinafter abbreviated as "MG2" as occasion demands).

The engine 200 is a gasoline engine as one example of the "internal combustion engine, which functions as a main power source of the hybrid vehicle 1.

The engine 200 is provided with a piston that generates reciprocating motion within a cylinder according to explosive force caused by combustion of an air-fuel mixture in a combustion chamber formed within the cylinder. The reciprocating motion of the piston is converted into rotary motion of a crankshaft via a connecting rod, and is extracted from the input shaft 400, which is coupled with the crankshaft. A detailed configuration of the engine 200 is less related to the present invention, and is thus omitted herein.

The motor generator MG1 is a motor generator provided with a power running function for converting electric energy into kinetic energy and a regenerative function for converting kinetic energy into electric energy. The motor generator MG1 is one example of the "rotating electric machine" according to the present invention.

The motor generator MG2 is a motor generator that is larger in size than the motor generator MG1, and is provided with the power running function for converting electric energy into kinetic energy and the regenerative function for converting kinetic energy into electric energy, as in the motor generator MG1. The motor generator MG2 is another example of the "rotating electric machine" according to the present invention.

Each of the motor generators MG1 and MG2 is configured as a synchronous motor generator, and is provided with, for example, a rotor having a plurality of permanent magnets on an outer circumferential surface, and a stator around which a three-phase coil for forming a rotating magnetic field is wound. The motor generators, however, may also have another configuration.

The power dividing mechanism 300 is a known planetary gear mechanism provided with a plurality of rotating elements that perform differential action on each other.

The power dividing mechanism 300 is provided with: a sun gear S1 disposed in a central part; a ring gear R1 concentrically disposed on an outer circumference of the sun gear S1; a plurality of pinion gears (not illustrated) disposed between the sun gear S1 and the ring gear R1, the pinion gears revolving while rotating on the outer circumference of the sun gear S1; and a carrier C1 pivotally supporting rotating shafts of the respective pinion gears.

The sun gear S1 is a reaction element for bearing reaction torque with respect to engine torque Te, which is output torque of the engine 200, and is fixed to an output rotating shaft to which the rotor of the motor generator MG1 is fixed. Therefore, a rotational speed of the sun gear S1 is equivalent to a MG1 rotational speed Nmg1, which is a rotational speed of the motor generator MG1.

The ring gear R1 is an output element of the power dividing mechanism 300, and is coupled with the drive shaft 500, which is a power output shaft of the power dividing mechanism 300, in such a manner that respective rotating shafts are shared. The drive shaft 500 is indirectly coupled with drive wheels DW of the hybrid vehicle 1 via a differential or the like.

The carrier C1 is coupled with the input shaft 400, which is coupled with the crankshaft of the engine 200 via a torsion damper TDP, in such a manner that respective rotating shafts are shared. A rotational speed of the carrier C1 is equivalent to a number of engine revolutions NE of the engine 200.

The power dividing mechanism 300 can distribute the engine torque Te, which is supplied from the engine 200 to the input shaft 400, to the sun gear S1 and the ring gear R1 by the carrier C1 at a predetermined ratio (or a ratio according to a gear ratio between the respective gears) under such a configuration, and can distribute the power of the engine 200 into two systems.

At this time, if, in order to make it easy to understand the operation of the power diving mechanism 300, a gear ratio ρ is defined as the number of teeth of the sun gear S1 to the number of teeth of the ring gear R1, then, torque Tes acting on the sun gear S1 when the engine torque Te is allowed to act on the carrier C1 from the engine 200 can be expressed by the following equation (1), and transmission torque or directly transmitted torque Ter that appears on the drive shaft 500 can be expressed by the following equation (2).

$$\mathrm{Tes} = \mathrm{Te} \times \rho \,/\, (1 + \rho) \cdots (1)$$

$$\mathrm{Ter} = \mathrm{Te} \times 1 \,/\, (1 + \rho) \cdots (2)$$

The reduction mechanism 600 is a planetary gear mechanism provided with rotating elements, which are a sun gear S2, a ring gear R2, pinion gears (not illustrated), and a carrier C2, disposed between the drive shaft 500 connected to an axle and the motor generator MG2.

In the reduction mechanism 600, the sun gear S2 is fixed to an output rotating shaft fixed to the rotor of the motor generator MG2. Moreover, the carrier C2 is unrotatably fixed to an outer case of the hybrid drive apparatus 10. Furthermore, the ring gear R2 is coupled with the drive shaft 500. In such a configuration, the reduction mechanism 600 can decelerate and transmit a rotational speed Nmg2 of the motor generator MG2 in accordance with a speed reduction ratio determined according to a gear ratio of the respective rotating elements (gears) with respect to the drive shaft 500.

The configuration of the reduction mechanism 600 is merely one form that can be adopted by a mechanism configured to decelerate the rotation of the motor generator MG2, and this type of reduction mechanism can have various forms in practice. Moreover, this type of reduction mechanism may be not necessarily provided for the hybrid drive apparatus. In other words, the motor generator may be directly coupled with the drive shaft 500.

<Operation of Embodiment>

Next, the operation of the embodiment will be explained.

<Running Mode of Hybrid Vehicle 1>

The hybrid vehicle 1 has the HV running mode and the EV running mode, as the running mode for defining an aspect of power transmission between the hybrid drive apparatus 10 and the drive wheels DW.
The HV running mode is a running mode in which a power dividing action of the power dividing mechanism 300 is used to allow the transmission torque Ter, which is a part of the engine torque Te, and MG2 torque Tmg2, which is output torque of the motor generator MG2, to cooperatively act on the drive shaft 500. In the HV running mode, power regeneration, i.e. power generation, is also performed by MG1 torque Tmg1, which is output torque of the motor generator MG1, by using the aforementioned torque Tes, which is another part of the engine torque Te.
At this time, an operating point of the engine 200 (or an operating condition defined by the number of engine revolutions NE and the engine torque Te) can be arbitrarily set by an electric continuously variable transmission (CVT) function of the hybrid drive apparatus 10, which uses the MG1 torque Tmg1 as the reaction torque. The operating point of the engine 200 is basically controlled to be an optimum fuel consumption operating point at which the engine 200 has a minimum fuel consumption rate (or fuel consumption), as a preferable form.
In contrast, the MG2 torque Tmg2 is basically controlled to compensate for a deficiency of the transmission torque Ter, with respect to drive shaft require torque required for the drive shaft 500. In other words, cooperative control of the MG2 torque Tmg2 and the engine torque Te is performed in the HV running mode.
For example, in the cooperative control, a power generation amount of the motor generator MG1 and a discharge amount of the motor generator MG2 or further a discharge amount of an auxiliary machine are constantly adjusted in such a manner that the SOC of the battery 12 is maintained at a target SOC as a target value. For example, if the SOC of the battery 12 is higher than the target SOC, power balance is inclined to a discharge side by increasing a ratio of the MG2 torque Tmg2 to the drive shaft required torque or the like, and if the SOC of the battery 12 is lower than the target SOC, the power balance is inclined to a charge side by reducing the ratio or the like.
On the other hand, the EV running mode is a running mode in which only the MG2 torque Tmg2 is used to act on the drive shaft 500 and only the power of the motor generator MG2 is used to allow the hybrid vehicle 1 to run. In the EV running mode, the engine 200 is basically set to be in an engine stop state (in some cases, minimum engine operation for power supply to the auxiliary machine is performed), and thus, the fuel consumption is zero or is low enough to be ignored. The EV running mode is, however, a running mode in which the power balance of the battery 12 is inclined to the discharge side, and thus, the SOC of the battery 12 basically keeps decreasing. Therefore, in the EV running mode, the SOC of the battery 12 is also considered to determine whether or not to perform the EV running mode.

<Outline of Intermittent Operation Control Process>

Here, the hybrid vehicle 1 is configured to select the intermittent operation mode as a part of the HV running mode, during steady running in which the vehicle speed V is maintained substantially at a target vehicle speed.
The intermittent operation mode is a mode in which acceleration running and coasting or inertia running are repeated. The intermittent operation mode requires relatively high fuel consumption during the acceleration running; however, total fuel consumption can be saved if a fuel amount saved during the coasting that allows no-load operation of the hybrid drive apparatus 10 is greater than the required fuel consumption.
The intermittent operation mode is performed in response to an execution request as a type of control signal generated, for example, if a driver of the hybrid vehicle 1 operates an operation button inside a vehicle interior, if a steady running state continues for a predetermined time or more, or if a fuel saving effect by the intermittent operation mode is expected in the steady running state in the running mode other than the EV running mode, or in similar cases.
By the way, the intermittent operation mode itself is a conventionally proposed control aspect; however, consideration is still not sufficiently given to execution timing of the intermittent operation mode.
In other words, if there is the execution request for the intermittent operation mode in the hybrid vehicle 1 that steadily runs in the EV running mode, the SOC of the battery 12 needs to be considered in the following point. To put it differently, not considering the SOC could cause such an extremely inefficient phenomenon that the SOC, which originally allows a decrease to near a convergence value without fuel consumption by the EV running mode, is reduced after starting the engine 200.
Such a problem has not been raised before, and there is therefore room for improvement in the cooperation between the EV running mode and the intermittent operation mode in practical operational aspects. In the embodiment, a relation between the running mode that can be adopted by the hybrid vehicle 1 and the intermittent operation mode is optimized by the intermittent operation control process.

<Details of Intermittent Operation Control Process>

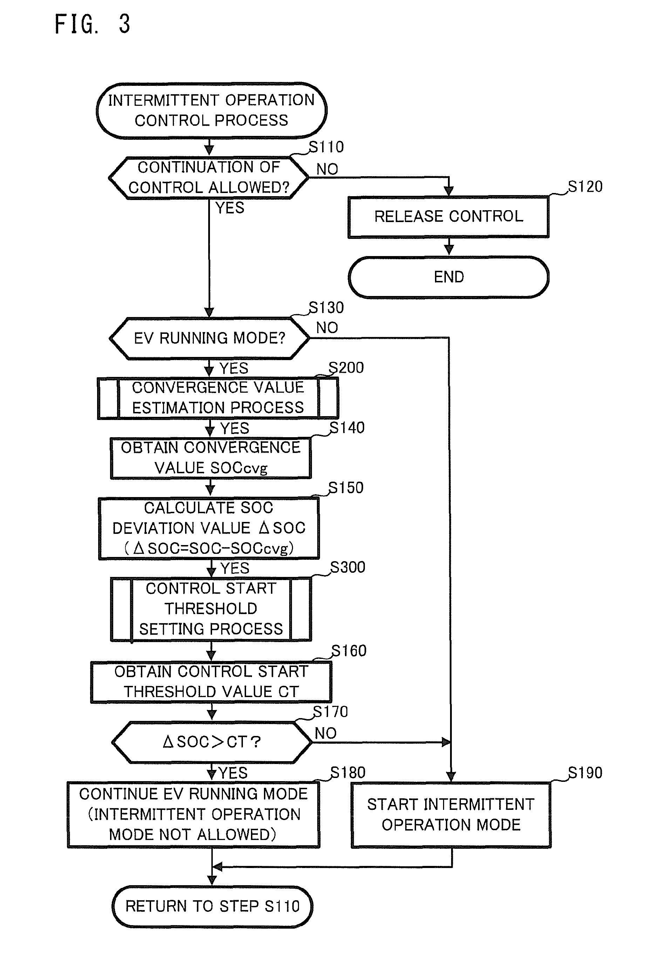

Now, with reference to FIG. 3, details of the intermittent operation control process will be explained. FIG. 3 is a flowchart illustrating the intermittent operation control process.

The intermittent operation control process is a process performed if an execution request switch for the intermittent operation mode is operated by the driver during the steady running, or if it is determined by the ECU 100 that the intermittent operation mode is to be performed, or in similar cases (i.e. if there is the aforementioned execution request).

In FIG. 3, the ECU 100 determines whether or not it is allowed to continue the intermittent operation control process (step S110). For example, if the hybrid vehicle 1 deviates from a steady running condition by operating a brake pedal, by operating an accelerator pedal by more than a predetermined amount, or by performing similar actions, it is not allowed to continue the intermittent operation control process. If it is not allowed to continue the intermittent operation control process (the step S110: NO), the ECU 100 releases or cancels the intermittent operation control process (step S120) and ends the intermittent operation control process.

On the other hand, if it is allowed to continue the intermittent operation control process (the step S110: YES), the ECU 100 determines whether or not the running mode of the hybrid vehicle 1 at that time point is the EV running mode (step S130). If the running mode is not the steady running by the EV running mode (the step S130: NO), the intermittent operation mode is started (step S190).

If it is required to perform the intermittent operation mode during the steady running by the EV running mode (the step S130: YES), a convergence value estimation process as a sub routine is performed (step S200), and a convergence value SOCcvg, which is a convergence value of the SOC of the battery 12, is obtained (step S140).

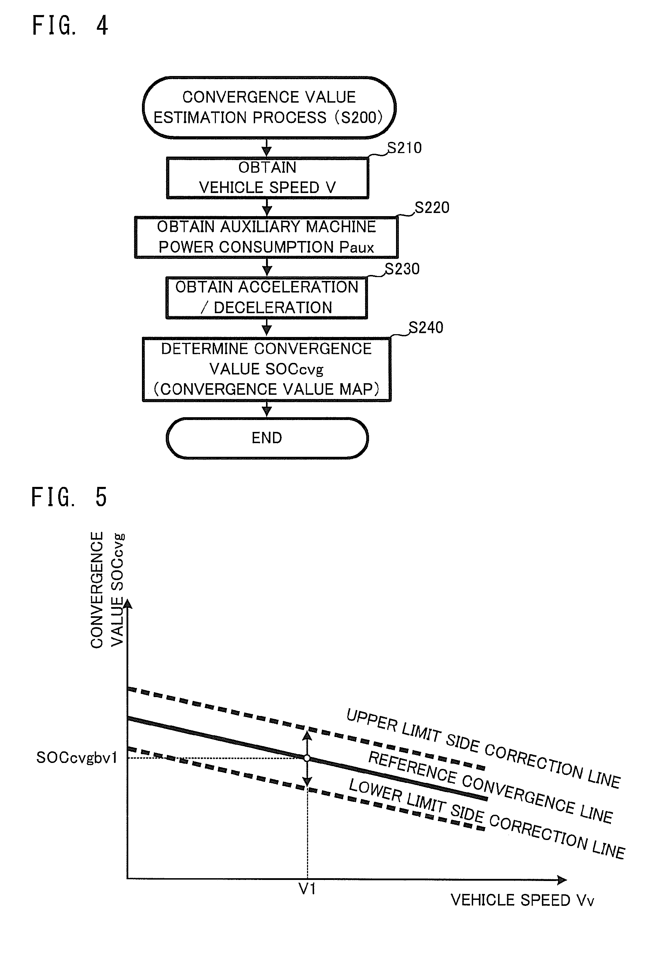

Now, with reference to FIG. 4, details of the convergence value estimation process will be explained. FIG. 4 is a flowchart illustrating the convergence value estimation process

In FIG. 4, the ECU 100 obtains the vehicle speed V (step S210). The ECU 100 then obtains auxiliary machine power consumption Paux (step S220). The auxiliary machine power consumption Paux is power consumption of various electrical auxiliaries provided for the hybrid vehicle 1, and is a value integrally gauged by the ECU 100 in controlling the operation of the hybrid vehicle 1. Various known methods can be applied to estimate the auxiliary machine power consumption Paux.

The ECU 100 then obtains acceleration/deceleration in the intermittent operation mode (step S230). The acceleration/deceleration in the intermittent operation mode is a concept including acceleration during the acceleration running and deceleration during the coasting. The acceleration/deceleration may be a fixed value or a variable value. The acceleration/deceleration may be a value that is adapted not to spoil the driver's drive feeling, experimentally, experientially, or theoretically in advance. The acceleration/deceleration may be set individually and specifically by a selection operation and a specification operation by the driver, regarding the acceleration, or the deceleration, or both of the acceleration and the deceleration.

The ECU 100 determines the convergence value SOCcvg on the basis of the various reference values obtained in the respective steps S210, S220, and S230 (step S240). Here, the determination of the convergence value SOCcvg uses a convergence value map stored in advance in the ROM. If the convergence value SOCcvg is determined, the convergence value estimation process is ended.

Now, with reference to FIG. 5, details of the convergence value SOCcvg will be explained. FIG. 5 is a conceptual diagram illustrating the convergence value SOCcvg.

FIG. 5 illustrates a coordinate plane representing the convergence value SOCcvg on a vertical axis and the vehicle speed V on a horizontal axis. The convergence value SOCcvg is determined by performing a correction process according to the auxiliary machine power consumption Paux obtained in the step S220 and the acceleration/deceleration obtained in the step S230, on a reference convergence value SOCcvgb, which is a point on a reference convergence line illustrated by a solid line. In the correction process, the final convergence SOCcvg is determined in a range defined by an upper limit side correction line illustrated and a lower limit side correction line illustrated.

For example, as illustrated, a reference convergence value SOCcvgbv1 is given to a vehicle speed V1, and the reference convergence value SOCcvgbv1 is corrected to increase or decrease as illustrated by arrows to determine the final convergence value SOCcvg.

The convergence value SOCcvg is a value that is related to integral SOC control of the hybrid vehicle 1. In other words, as described above, in the hybrid vehicle 1, the power balance regarding the discharge/charge of the battery 12 is constantly adjusted in such a manner that the SOC of the battery is steadily maintained at the target SOC (or in a predetermined range including the target SOC). The reference convergence value SOCcvgb, which is a reference value of the convergence value SOCcvg in the embodiment, is, for example, a value that is equivalent to the target SOC.

The reference convergence value SOCcvgb in the embodiment tends to decrease with respect to an increase in the vehicle speed V. One factor of this is regenerative braking during the deceleration in the hybrid vehicle 1. The regenerative braking is a braking aspect in which the motor generator MG2 is regeneratively braked by torque input from the drive shaft 500 to allow regenerative torque to act as a type of braking torque. In a period in which the regenerative braking is performed, the battery 12 is charged by the power regeneration. In other words, the SOC of the battery 12 increases. Here, in particular, regenerative power obtained by the regenerative braking tends to increase to some extent by the braking from a high vehicle speed region. Therefore, in a higher vehicle speed region, the SOC of the battery 12 requires more appropriate room for charging. Accordingly, the target SOC, i.e. the reference convergence value SOCcvgb, further decreases in the higher vehicle speed region.

Here, the convergence of the SOC of the battery 12 to the convergence value SOCcvg is realized by controlling the power balance, which is defined by a discharge/charge amount in an acceleration running period and a discharge/charge amount in a coasting period, to be zero or into a predetermined range near zero, in a process in which the ECU 100 performs the SOC convergence control.

In the intermittent operation mode, however, driving force is not continuously supplied to the drive wheels DW, and the SOC of the battery 12 thus constantly varies. For example, in the coasting period in the intermittent operation mode, the hybrid drive apparatus 10 is in a no-load state in which the driving force is not supplied to the drive wheels DW, and the SOC thus decreases in the course of nature according to the auxiliary machine power consumption Paux. An amount of the decrease in the SOC is restored by discharge/charge control in the subsequent acceleration running period, i.e. cooperation between the engine 200 and the motor generator MG2. The convergence of the SOC in the intermittent operation mode can have such a meaning.

Here, in particular, if the auxiliary machine power consumption Paux is high, the extent of a temporal decrease in the SOC in the coasting period increases. If a required load of the battery 12 suddenly increases when there is the temporal decrease in the SOC, there is a possibility that the battery 12 will have insufficient power supply capacity. Thus, in the embodiment, the reference convergence value SOCcvgb is corrected to increase or decrease according to the high or low auxiliary machine power consumption Paux, and the convergence value SOCcvg is determined.

On the other hand, if set acceleration in the acceleration running period is high, the relatively large engine torque Te is required, and thus, the charge amount of the battery 12 necessarily increases. If it is tried to obtain relatively high deceleration by simultaneously using the regenerative braking in the coasting period or by performing similar actions, the charge amount of the battery 12 increases by an amount in which the regenerative power increases. If there is a sudden charging request in the case of such a temporal increase in the SOC, there is a possibility that the battery 12 has insufficient room for charging. Thus, in the embodiment, the reference convergence value SOCcvgb is corrected to decrease or increase according to the high or low acceleration/deceleration, and the convergence value SOCcvg is determined.

The setting of the convergence value SOCcvg according to the auxiliary machine power consumption Paux and the acceleration/deceleration is performed to such an effect, and the convergence value SOCcvg is determined to be one value as a result of complex effect of the aforementioned factors. Practically, the convergence value map is a map obtained by digitalizing the relation illustrated in FIG. 5, wherein the map uses the vehicle speed V, the acceleration/deceleration and the auxiliary machine power consumption as parameters. The ECU 100 selectively obtains a value corresponding to the vehicle speed V, the acceleration/deceleration and the auxiliary machine power consumption at that time point, from the convergence value map, and determines the value as the convergence value SOCcvg.

Such an aspect of setting the convergence value SOCcvg is merely one example, and another setting aspect may be adopted. For example, in the embodiment, the convergence value(s) determined experimentally, experientially, or theoretically in advance are stored in the ROM as the convergence value map; however, an operation algorithm for obtaining the convergence value is provided in advance, and the convergence value may be operated or calculated, individually and specifically, in accordance with the operation algorithm at each time. Even if another setting aspect is adopted, the nature of the present invention is not influenced.

Moreover, in the embodiment, the convergence value SOCcvg is determined on the basis of the vehicle speed V, the auxiliary machine power consumption Paux, and the acceleration/deceleration in the acceleration running period; however, the convergence value SOCcvg may be also determined in view of another determination element, instead of or in addition to the above parameters. For example, an allowable variation width (i.e. a width defined by an upper limit value and a lower limit value) of the vehicle speed in the acceleration running period, a charge limit value Win (or a limit value of input current per unit time) of the battery 12, a discharge limit value Wout (or a limit value of output current per unit time), or the like may be also considered.

Back in FIG. 3, if the convergence value SOCcvg is obtained, the ECU 100 calculates a SOC deviation value ΔSOC (step S150). The SOC deviation value ΔSOC is a deviation between the SOC of the battery 12 and the convergence value SOCcvg (i.e. ΔSOC=SOC-SOCcvg), and is a reference value that defines the extent of deviation of the current SOC of the battery 12 from the convergence value when the intermittent operation mode is started.

If the SOC deviation value ΔSOC is calculated, the ECU 100 performs a control start threshold setting process as a sub routine (step S300). If the control start threshold setting process is performed, a control start threshold value CT set by the control start threshold setting process is obtained (step S160).

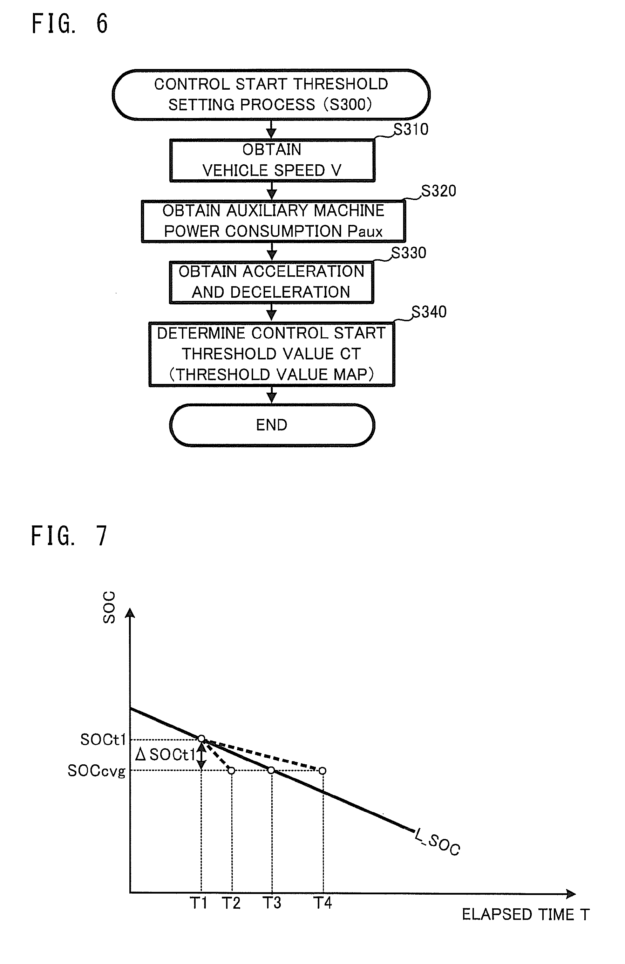

Now, with reference to FIG. 6, details of the control start threshold setting process will be explained. FIG. 6 is a flowchart illustrating the control start threshold setting process.

In FIG. 6, as in the aforementioned convergence value estimation process, the ECU 100 obtains the vehicle speed V (step S310), obtains the auxiliary machine power consumption Paux (step S320), and obtains the acceleration/deceleration in the acceleration running period in the intermittent operation mode (step S330).

The ECU 100 sets the control start threshold value CT on the basis of the obtained values (step S340). The control start threshold value CT is set by selecting a value corresponding to the obtained vehicle speed V, the obtained auxiliary machine power consumption Paux, and the obtained acceleration/deceleration, from a threshold value map stored in the ROM in advance.

Back in FIG. 3, if the control start threshold value CT is set, the ECU 100 determines whether or not the SOC deviation value $\Delta$SOC is greater than the obtained control start threshold value CT (step S170).

If the SOC deviation value $\Delta$SOC is greater than the obtained control start threshold value CT (the step S170: YES), the ECU 100 continues the EV running mode (step S180). In other words, it is not allowed to perform the intermittent operation mode.

If the SOC deviation value $\Delta$SOC is less than or equal to the obtained control start threshold value CT (the step S170: NO), the ECU 100 moves the process to the step S190 and starts the intermittent operation mode. If either one of the EV running mode and the intermittent operation mode in the HV running mode is selected, the process is returned to the step S101. The intermittent operation control process is performed as described above.

Now, with reference to FIG. 7, the control start threshold value CT will be explained. FIG. 7 is a conceptual diagram illustrating the control start threshold value CT.

FIG. 7 illustrates the SOC of the battery 12 on a vertical axis and an elapsed time T from an arbitrary reference time point in a steady running period in the EV running mode on a horizontal axis. Moreover, behavior of the SOC of the battery 12 is illustrated by L_SOC (reference to a solid line).

The SOC deviation value $\Delta$SOC in the embodiment is a value of the deviation between the SOC of the battery 12 at that time point and the convergence SOCcvg. For example, in FIG. 7, a SOC deviation value $\Delta$SOCt1 at a certain elapsed time T1 is SOCt1-SOCcvg.

Here, if the SOC deviation value $\Delta$SOCt1 is set as the control start threshold value CT, the intermittent operation mode is started at a time point corresponding to the elapsed time T1.

By the way, a change rate of the SOC of the battery 12 after the start of the intermittent operation mode is influenced by the aforementioned SOC convergence control, and changes according to the vehicle speed V, the auxiliary machine power consumption Paux, the acceleration/deceleration in the acceleration running period, an allowable vehicle speed range, the discharge/charge limit value of the battery 12, and the like. For example, if the change rate is equal to the illustrated L_SOC, the SOC reaches the convergence value SOCcvg at a time point corresponding to an elapsed time T3 after the switching to the intermittent operation mode at the time point corresponding to the elapsed time T1.

If, however, the change rate is faster than the illustrated L_SOC (refer to a dashed line), of course, the SOC reaches the convergence value SOCcvg at an earlier time point and reaches the SOC convergence value SOCcvg at a time point corresponding to an elapsed time T2 illustrated. On the other hand, if the change rate is slower than the illustrated L_SOC (refer to a dashed line), of course, the SOC reaches the convergence value SOCcvg at a later time point and reaches the SOC convergence value SOCcvg at a time point corresponding to an elapsed time T4 illustrated.

Therefore, the control start threshold value CT for making the SOC of the battery 12 converge to the convergence value SOCcvg after a lapse of a substantially constant time after the switching to the intermittent operation mode changes according to the aforementioned running condition regarding the hybrid vehicle 1 at that time point. The control start threshold value CT according to the embodiment is determined, for example, in such a manner that the SOC reaches the convergence value SOCcvg after the lapse of the substantially constant time that does not depend on the running condition of the hybrid vehicle 1 as described above.

Such an aspect of setting the control start threshold value CT, however, is one example. In an extreme case, the control start threshold value CT may be a fixed value obtained by adding a certain amount of offset to the convergence value SOCcvg. Alternatively, the control start threshold value CT may be a variable value obtained by adding a certain percentage of offset to the convergence value SOCcvg. In any case, in comparison with the case where the EV running mode is stopped unconditionally according to the execution request for the intermittent operation mode, the fuel consumption of the engine 200 can be saved.

As explained above, according to the intermittent operation control process in the embodiment, if the intermittent operation mode is required during the steady running in the EV running mode, the switching to the intermittent operation mode is prohibited until the SOC of the battery 12 decreases to the convergence value SOCcvg of the SOC in the intermittent operation mode or its neighborhood value, and the EV running mode without accompanying the fuel consumption is continued.

It is therefore possible to save the fuel consumption in a short period from the request for the intermittent operation mode, in comparison with the case where the SOC of the battery 12 is reduced to the convergence value SOCcvg with accompanying the fuel consumption, by the intermittent operation mode, which is performed as a part of the HV running mode accompanied by the engine start. In other words, according to the running state control apparatus for the hybrid vehicle of the present invention, it is possible to switch the EV running mode to the intermittent operation mode at optimal timing, by providing a clear guideline when the EV running mode and the intermittent operation mode are allowed to cooperate.

The present invention is not limited to the aforementioned embodiment, but various changes may be made, if desired, without departing from the essence or spirit of the invention which can be read from the claims and the entire specification. A running state control apparatus for a hybrid vehicle which involves such changes is also intended to be within the technical scope of the present invention.

Industrial Applicability

The present invention can be applied to the cruise control of the hybrid vehicle that is provided with the EV running mode and the HV running mode as the running mode and that has further the intermittent operation mode as a part of the HV running mode.

Description of Reference Numerals and Letters

| | |
|---|---|
| 1 | hybrid vehicle |
| 10 | hybrid drive apparatus |
| 11 | PCU |
| 12 | battery |
| MG1, MG2 | motor generator |
| 100 | ECU |
| 200 | engine |
| 300 | power dividing mechanism |
| 400 | input shaft |
| 500 | drive shaft |
| 600 | reduction mechanism |

**Claims**

1.  A running state control apparatus for a hybrid vehicle, configured to control the hybrid vehicle, the hybrid vehicle comprising:

> an internal combustion engine;
> at least one rotating electric machine; and
> a power storing device,
> the hybrid vehicle being configured to select, as a running mode, an electric vehicle (EV) running mode for allowing only power of the rotating electric machine to act on drive wheels, and a hybrid vehicle (HV) running mode for allowing both the power of the rotating electric machine and power of the internal combustion engine to cooperatively act on the drive wheels,
the hybrid vehicle being configured further to select an intermittent operation mode for repeating acceleration running and coasting by intermittently driving the drive wheels, in the HV running mode,
said running state control apparatus comprising:

> a switching control device configured to compare a power storage amount of the power storing device with a convergence value of the power storage amount in a case where the intermittent operation mode is selected, and to switch the EV running mode to the intermittent operation mode according to a comparison result.

2.  The running state control apparatus for the hybrid vehicle according to claim 1, wherein
said running state control apparatus further comprises a determining device configured to determine whether or not the intermittent operation mode is required,
said switching control device switches the EV running mode to the intermittent operation mode on the basis of a deviation between the power storage amount and the convergence value, if said determining device determines that the intermittent operation is required when steady running by the EV running mode is performed.

3.  The running state control apparatus for the hybrid vehicle according to claim 2, wherein said switching control device switches the EV running mode to the intermittent operation mode if the power storage amount is greater than or equal to the convergence value and if the deviation is less than a reference value.

4.  The running state control apparatus for the hybrid vehicle according to claim 1, wherein the convergence value is set on the basis of at least one of a vehicle speed, auxiliary machine power consumption, an upper/lower limit value of the vehicle speed in the intermittent operation mode, acceleration/deceleration in the intermittent operation mode, and a discharge/charge limit value of said power storing device.

# FIG. 1

FIG. 2

# FIG. 3

```
        ┌─────────────────────────────┐
        │  INTERMITTENT OPERATION     │
        │     CONTROL PROCESS         │
        └──────────────┬──────────────┘
                       │            S110
             ┌─────────▼─────────┐  NO
             │  CONTINUATION OF  ├──────────────┐
             │ CONTROL ALLOWED?  │              │        S120
             └─────────┬─────────┘     ┌────────▼──────────┐
                     YES               │  RELEASE CONTROL  │
                       │               └────────┬──────────┘
                       │                        │
                       │                 ┌──────▼──────┐
                       │                 │     END     │
                       │                 └─────────────┘
                       │            S130
             ┌─────────▼─────────┐  NO
             │ EV RUNNING MODE?  ├─────────────────────────┐
             └─────────┬─────────┘                         │
                     YES            S200                    │
        ┌──────────────▼──────────────┐                    │
        │   CONVERGENCE VALUE         │                    │
        │   ESTIMATION PROCESS        │                    │
        └──────────────┬──────────────┘                    │
                     YES            S140                    │
        ┌──────────────▼──────────────┐                    │
        │  OBTAIN CONVERGENCE         │                    │
        │   VALUE SOCcvg              │                    │
        └──────────────┬──────────────┘                    │
                       │            S150                    │
        ┌──────────────▼──────────────┐                    │
        │   CALCULATE SOC             │                    │
        │ DEVIATION VALUE ΔSOC        │                    │
        │  (ΔSOC=SOC-SOCcvg)          │                    │
        └──────────────┬──────────────┘                    │
                     YES            S300                    │
        ┌──────────────▼──────────────┐                    │
        │   CONTROL START             │                    │
        │     THRESHOLD               │                    │
        │  SETTING PROCESS            │                    │
        └──────────────┬──────────────┘                    │
                       │            S160                    │
        ┌──────────────▼──────────────┐                    │
        │  OBTAIN CONTROL START       │                    │
        │   THRESHOLD VALUE CT        │                    │
        └──────────────┬──────────────┘                    │
                       │            S170                    │
             ┌─────────▼─────────┐  NO                      │
             │    ΔSOC > CT ?    ├───────────────┐          │
             └─────────┬─────────┘               │          │
                     YES          S180           │          │  S190
   ┌─────────────────▼─────────────────┐  ┌──────▼──────────▼──────┐
   │ CONTINUE EV RUNNING MODE          │  │  START INTERMITTENT    │
   │ (INTERMITTENT OPERATION           │  │  OPERATION MODE        │
   │  MODE NOT ALLOWED)                │  └──────────┬─────────────┘
   └─────────────────┬─────────────────┘            │
                     │◄──────────────────────────────┘
          ┌──────────▼──────────┐
          │  RETURN TO STEP S110 │
          └─────────────────────┘
```

FIG. 4

```
┌─────────────────────────────┐
│   CONVERGENCE VALUE         │
│ ESTIMATION PROCESS (S200)   │
└─────────────────────────────┘
              │
              ▼           S210
┌─────────────────────────────┐
│         OBTAIN              │
│      VEHICLE SPEED V        │
└─────────────────────────────┘
              │
              ▼           S220
┌─────────────────────────────┐
│  OBTAIN AUXILIARY MACHINE   │
│  POWER CONSUMPTION Paux     │
└─────────────────────────────┘
              │
              ▼           S230
┌─────────────────────────────┐
│   OBTAIN ACCELERATION       │
│    / DECELERATION           │
└─────────────────────────────┘
              │
              ▼           S240
┌─────────────────────────────┐
│  DETERMINE CONVERGENCE      │
│     VALUE SOCcvg            │
│  (CONVERGENCE VALUE MAP)    │
└─────────────────────────────┘
              │
              ▼
┌─────────────────────────────┐
│            END              │
└─────────────────────────────┘
```

FIG. 5

# FIG. 6

CONTROL START THRESHOLD
SETTING PROCESS (S300)

↓

OBTAIN
VEHICLE SPEED V  — S310

↓

OBTAIN AUXILIARY MACHINE
POWER CONSUMPTION Paux  — S320

↓

OBTAIN ACCELERATION
AND DECELERATION  — S330

↓

DETERMINE CONTROL START
THRESHOLD VALUE CT
(THRESHOLD VALUE MAP)  — S340

↓

END

# FIG. 7

SOC

SOCt1

ΔSOCt1

SOCcvg

L_SOC

T1 T2 T3 T4

ELAPSED TIME T

## INTERNATIONAL SEARCH REPORT

| International application No. |
| --- |
| PCT/JP2013/081396 |

A.   CLASSIFICATION OF SUBJECT MATTER
*B60W20/00*(2006.01)i, *B60K6/445*(2007.10)i, *B60L11/14*(2006.01)i, *B60W10/04*
(2006.01)i, *B60W10/06*(2006.01)i, *B60W10/08*(2006.01)i, *B60W10/26*(2006.01)i,
*B60W30/182*(2012.01)i, *F02D29/02*(2006.01)i
According to International Patent Classification (IPC) or to both national classification and IPC

B.   FIELDS SEARCHED

Minimum documentation searched (classification system followed by classification symbols)
B60W10/00-50/16, B60K6/00-6/547, B60L1/00-15/42, F02D29/00-29/06

Documentation searched other than minimum documentation to the extent that such documents are included in the fields searched
Jitsuyo Shinan Koho          1922-1996   Jitsuyo Shinan Toroku Koho   1996-2014
Kokai Jitsuyo Shinan Koho   1971-2014   Toroku Jitsuyo Shinan Koho   1994-2014

Electronic data base consulted during the international search (name of data base and, where practicable, search terms used)
DWPI

C.   DOCUMENTS CONSIDERED TO BE RELEVANT

| Category* | Citation of document, with indication, where appropriate, of the relevant passages | Relevant to claim No. |
| --- | --- | --- |
| A | WO 2009/101920 A1  (Toyota Motor Corp.), 20 August 2009 (20.08.2009), paragraph [0057]; fig. 5 & US 2010/0324795 A1   & EP 2243675 A1 & CN 101687508 A | 1-4 |
| A | JP 2009-286185 A  (Toyota Motor Corp.), 10 December 2009 (10.12.2009), paragraphs [0003], [0006] (Family: none) | 1-4 |
| A | JP 5-316658 A  (Hino Motors, Ltd.), 26 November 1993 (26.11.1993), paragraphs [0017], [0024]; fig. 2, 3 (Family: none) | 1-4 |

|X| Further documents are listed in the continuation of Box C.          |_| See patent family annex.

| | |
| --- | --- |
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 13 February, 2014 (13.02.14) | 25 February, 2014 (25.02.14) |

| Name and mailing address of the ISA/<br>   Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2013/081396

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2011/092855 A1  (Toyota Motor Corp.), 04 August 2011 (04.08.2011), claim 4 & US 2012/0330505 A1    & EP 2529972 A1 & CN 102725187 A | 1-4 |
| A | JP 2010-280363 A  (Toyota Motor Corp.), 16 December 2010 (16.12.2010), entire text; all drawings (Family: none) | 1-4 |
| A | JP 2011-20561 A  (Isuzu Motors Ltd.), 03 February 2011 (03.02.2011), entire text; all drawings (Family: none) | 1-4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010280363 A
- JP 2011020561 A
- JP 2005047342 A
- JP 2012110089 A
- JP 2011235849 A